Europäisches Patentamt

European Patent Office

Office européen des brevets

(11) Veröffentlichungsnummer: **0 150 406**
**B1**

(12) # EUROPÄISCHE PATENTSCHRIFT

(45) Veröffentlichungstag der Patentschrift:
23.09.87

(51) Int. Cl.⁴: **G 11 B 23/087**

(21) Anmeldenummer: **84115526.0**

(22) Anmeldetag: **15.12.84**

(54) **Bandkassette, insbesondere Magnetbandkassette und Beilagefolie dafür.**

(30) Priorität: **20.01.84 DE 8401561 U**

(43) Veröffentlichungstag der Anmeldung:
**07.08.85 Patentblatt 85/32**

(45) Bekanntmachung des Hinweises auf die Patenterteilung:
**23.09.87 Patentblatt 87/39**

(84) Benannte Vertragsstaaten:
**DE FR GB NL**

(56) Entgegenhaltungen:
**DE-A-2 121 375**
**DE-U-7 716 771**
**GB-A-1 245 606**
**GB-A-2 114 934**

(73) Patentinhaber: **BASF Aktiengesellschaft, Carl-Bosch- Strasse 38, D-6700 Ludwigshafen (DE)**

(72) Erfinder: **Schoettle, Klaus, Ladenburger Strasse 70, D-6900 Heidelberg (DE)**
Erfinder: **Sold, Roland, Rheingoenheimer Strasse 1, D-6704 Mutterstadt (DE)**
Erfinder: **Brinkmann, Uwe, Allmendstrasse 8, D-7640 Kehl (DE)**
Erfinder: **Wagner, Werner, Dr. Ing., Fernacher Hoehe 22, D-7602 Oberkirch (DE)**

LIBER, STOCKHOLM 1987

## Beschreibung

Die Erfindung betrifft eine Bandkassette, insbesondere Magnetbandkassette mit mindestens einem Bandwickel auf einem Wickelkern oder einer Flanschspule, auf den und von dem ein Band auf- bzw. abwickelbar ist, wobei zwischen dem die Bandwindungen aufweisenden Bandwickel und den Boden- und Deckelwänden mindestens je eine Beilagefolie mit umgebogenen oder umgeknickten Längsknickstreifen vorgesehen ist, sowie Beilagefolien für derartige Bandkassetten, insbesondere Kompaktkassetten.

In einer bekannten Kompaktkassette gemäß DE-A-2 121 375 sind gegenüber den Innenwänden des Gehäuses etwa um 135° abgeknickte Folienrandteile einer Beilagefolie vorgesehen. Unter der Gewichtsbelastung der Wickelkerne mit dem oder den Bandwickeln wölbt sich der Mittelteil der Folie konkav ein und der oder die Bandwickel werden dadurch aus ihrer Bandführungsebene hinausgedrängt. Das auflaufende Band wird damit in der Höhe versetzt auf den Wickelkern bzw. auf den Umfang des Bandwickels aufgewickelt. Im Ergebnis werden stufenförmige Wickel und Bandbeschädigungen erhalten, die sich als Bandkantenverdehnungen und Bandknittern zeigen können. Beim schnellen Umspulen des Bandes kann auch ein störendes Rasseln auftreten. Im Extremfall kommt es durch die Höheneinengung des Kasetteninnenraums durch hochstehende Bandwindungen zum Festlaufen und Stillstand des Bandwickels, was den Ausfall der Kassette bedeutet.

Bei Magnetbandkassetten bestehen Gehäuse, Beilagenfolien, Band und andere Teile der Bandführung vorzugsweise aus Kunststoffmaterial. Wenn sich die Spulen in der Kassette drehen, kommt es an vielen Stellen zum Aufbau statischer Elektrizität, z. B. durch Ladungstrennung am vom Wickel ablaufenden Band und durch Reibung an Lagerfolien, Führungen oder an anderen Gehäuseteilen. Diese statischen Ladungen sind in Magnetbandkassetten völlig unerwünscht, da sie durch Anziehungskräfte zu erhöhter Reibung, zu ungleichmäßigem Lauf und zu unregelmäßigem Bandwickeln, aber auch bei schlagartigen Entladungen zu Störungen der Magnetaufzeichnung bzw. Wiedergabe führen kann.

Zur Verhinderung solcher Probleme werden Lagerfolien eingesetzt die ganz oder teilweise antistatisch ausgestattet sind. So sind mit Graphit gefüllte bzw. beschichtete Folien aus gleitfähigem Teflon bekannt.

In der GB-A-2 114 934 werden in einer Kassette zwei lamellenartig verbundene Folien beschrieben, von denen eine mit einer dem Bandwickel zugewandten Gleitschicht und die dem Gehäuse zugewandte Seite der anderen Folie mit einer antistatischen Schicht beschichtet ist. Diese Lagerfolie ist kompliziert aufgebaut und damit teuer und hat den weiteren Nachteil, daß sie, wegen der isolierenden Wirkung der Gleitschicht und/oder der beiden Folien und/oder der zwischen den Folien liegenden Klebeschicht, keine leitfähige Verbindung zwischen den Bandwickeln und den Gehäuseteilen liefert und deshalb den Aufbau von elektrostatischen Potentialunterschieden nicht verhindern kann. Dies ist, wie bekannt, nur dann der Fall, wenn eine leitfähige Verbindung besteht, z. B. mit einer ganz aus leitfähigem Material wie Teflon/Graphit-Verbundfolie bestehenden Lagerfolie. Diese Materialien sind jedoch teuer und in den erforderlichen Dicken wenig formstabil, so daß es oft aus mechanischen Gründen zu Störungen des Wickelverhaltens kommt. Dazu sind solche wegen des Graphits undurchsichtig, so daß man an der Stelle der Kassettenfenster Löcher aus der Lagerfolie ausstanzen muß, in deren Bereich keine Führung der Bandwickel erfolgen kann und die wegen weiterer Schwächung der mechanischen Stabilität nur sehr klein sein dürfen. Dadurch sind große, die Verkaufsfähigkeit der Kassette steigernde Fensterausführungen ausgeschlossen.

Andererseits sind Lagerfolien aus durchsichtigen Kunststoffolien bekannt, die an den Längsrändern dem Band zugewandte, mit einer leitfähigen Schicht versehene Sicken aufweisen. Diese Schicht endet an den ausgestanzten Kanten der Lagerfolien und ergibt somit auch keine leitfähige Verbindung zwischen Bandwickel und Gehäuse.

Der Erfindung liegt die Aufgabe zugrunde, Bandkassetten und Beilagefolien derartig auszubilden, daß die Bandführung in der Kassette verbessert wird und der Betriebsausfall der Kassetten infolge mechanischer und/oder elektrostatischer Störungen vermieden wird.

Mit einer Bandkassette der im Oberbegriff beschriebenen Art wird diese Aufgabe gelöst, wenn jede Folie einen Mittelteil und diesen seitlich begrenzenden mindestens zwei Längsknickstreifen aufweist, wobei letztere der Boden- oder Deckelwand zugewandt sind und mit dem Folienmittelteil einen Winkel von kleiner als 90° einschließen, so daß die Längsknickstreifen den Folienmittelteil gegenüber dem Bandwickel innerhalb des Umrisses des Folienmittelteils an der zugehörigen Boden- oder Deckelwand von unten bzw. von oben abstützen. Der Vorzugsbereich für den Winkel liegt zwischen ca. 5° und 30°. Alle Winkelangaben beziehen sich auf die jeweils unbelastete Folie.

Die Beilagefolie für eine erfindungsgemäße Bandkassette verbleibt bei Abstützung der Längsstreifen auf einer ebenen Stützfläche und bei Auflage eines oder beider Bandwickel vorteilhafterweise im wesentlichen in einer Lage parallel zur Stützfläche.

Die erfindungsgemäßen Beilagefolien sind wie im folgenden aufgezählt ausgebildet und die erfindungsgemäßen Bandkassetten enthalten entsprechend geformte Folien.

Die Folien besitzen vorteilhaft Längsknickstreifen oder -falten an den Längsrändern und diese Längsknickstreifen sind im einfachsten Fall jeweils als eine einzige Winkelabknickung zur Folienebene ausgebildet oder weisen außerdem noch eine Parallelumknickung, bezogen auf den Folienmittelteil, auf. Die Längsknickstreifen können auch bei einem oder beiden aufliegenden Bandwickeln die Folienrückseite berührend ausgeführt sein.

Bezüglich der erhöhten Sicherheit gegen statische Aufladungen können entweder die Längsknickstreifen, insbesondere außen, leitfähig ausgebildet sein, oder die gesamte Folie ist elektrisch leitfähig ausgebildet. Dadurch wird in einfacher Weise und günstiger Formgebung eine leitende Verbindung zwischen Bandwickel und Kassettengehäuse herstellbar, so daß elektrostatische Ladungsunterschiede nicht auftreten können.

Hinsichtlich einer besonders günstigen Folienausbildung ist es zweckmäßig, den Abstand der Längsknickstreifen so zu wählen, daß er gleich oder etwas kleiner als der Durchmesser des Wickelkerns der Kassette ist, wodurch beide, der Wickelkern und der Bandwickel, gleichzeitig abstützbar sind.

Weitere Einzelheiten der Erfindung sind anhand von Ausführungsbeispielen in der Zeichnung dargestellt und nachfolgend beschrieben.

In der Zeichnung ist dargestellt in
Figur 1 ein Querschnitt durch eine Magnetbandkassette, Gehäusewand mit Beilagefolien im unbelasteten und belasteten bekannten Zustand
Figur 2 ein Querschnitt durch eine Magnetbandkassette, Gehäusewand mit erfindungsgemäßen Beilagefolien im unbelasteten und belasteten Zustand
Figur 3 eine weitere Folienausbildung gemäß der Erfindung in perspektivischer Ansicht
Figur 4 eine Draufsicht auf eine Kompaktkassette mit erfindungsgemäßen Folien
Figur 5 eine Querschnittsdarstellung gemäß Schnittlinie IV-IV in Figur 4.

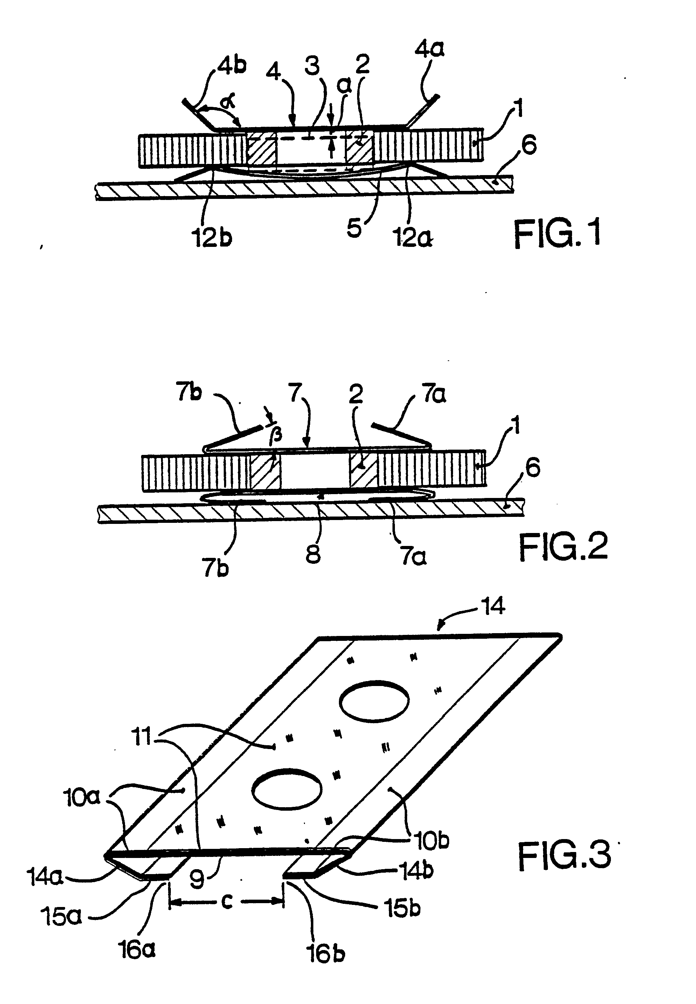

In Figur 2 ist ein Bandwickel 1 auf einem flanschlosen Wickelkern 2 über einer Kassettengehäusewand 6 dargestellt, wobei sich eine Beilagefolie 8 zwischen Bandwickel 1 und Wand 6 und eine weitere Beilagefolie 7 auf dem Bandwickel 1 befindet. Die obere Folie 7 ist daher unbelastet und ihre Ränder 7a und 7b sind gegenüber der Folienebene um etwa β = 20° zum Mittelteil der Folie hin abgebogen. Im Gegensatz dazu weist die gemäß DE-A-2 121 375 bekannte Folie (Fig 1) einen Winkel alpha von 135° auf, die Folienrandteile sind somit vom Folienmittelteil fort nach außen abgebogen, so daß nur die Biegekanten an der Kassettenwand anliegen und die Folie abstützen. Bei größer werdendem Bandwickel (Höchstgewicht in Kompaktkassetten ca. 10 g) biegt sich die jeweils belastete, z. B. die untere Folie immer mehr konkav durch, und es erfolgt ein Höhenversatz des jeweils leeren Wickelkerns, z. B. nach unten. Das in dieser ausgelenkten Lage weiter aufgewickelte Band wird dadurch zwangsläufig in der Höhe lagenversetzt aufgewickelt, was zu mechanischen und akustischen Störungen beim Betrieb der Kassette führt oder den Betrieb unmöglich macht.

Die erfindungsgemäßen Folien 7 und 8 sind mit den bekannten Folien nicht vergleichbar und mit Längsknickstreifen oder -falten 7a und 7b ausgebildet, die zum Folienmittelteil hin im spitzen Winkel β umgeknickt oder umgefaltet sind. Damit ergibt sich an der Außenseite der Längsknickstreifen 7a und 7b eine flächenmäßige Anlage an den Kasseteninnenwänden und damit eine Flächenabstützung jeder Folie, wodurch eine konkave Durchbiegung bei größer werdendem Winkel vermieden wird. Die Abstützung des Mittelteils durch die erfindungsgemäßen Längsknickstreifen kommt durch die gewählte Winkelanordnung nur innerhalb des Umrisses des Mittelteils zur Wirkung. Der Winkel β kann zwischen 0° und max. 90° liegen und sollte vorzugsweise zwischen etwa 5° und etwa 30° gewählt werden.

Die untere Folie 8 ist in Figur 2 durch das Gewicht des Bandwickels 1 belastet. In der Wirkung sorgt die Folie 8 durch die Federkraft der Knickkanten 13a und 13b für eine konvexe Auswölbung oder ein Anlegen ihres Mittelteils an den Bandwickel 1. Die nun flachliegenden Längsknickstreifen 7a und 7b stützen den Mittelteil der Folie 8 mit Abstand gegen die Gehäusewand 6 ab. Über die Form der Abbiegung oder Abknickung sowie über die Breite der Biege- oder Knickfalten ist die Federkraft variierbar, selbstverständlich auch durch Änderung der Foliendicke oder des Folienmaterials. Da die Abstützkräfte auf den Wickel beidseitig gleich sind, ist seine zentrierte Lage gewährleistet.

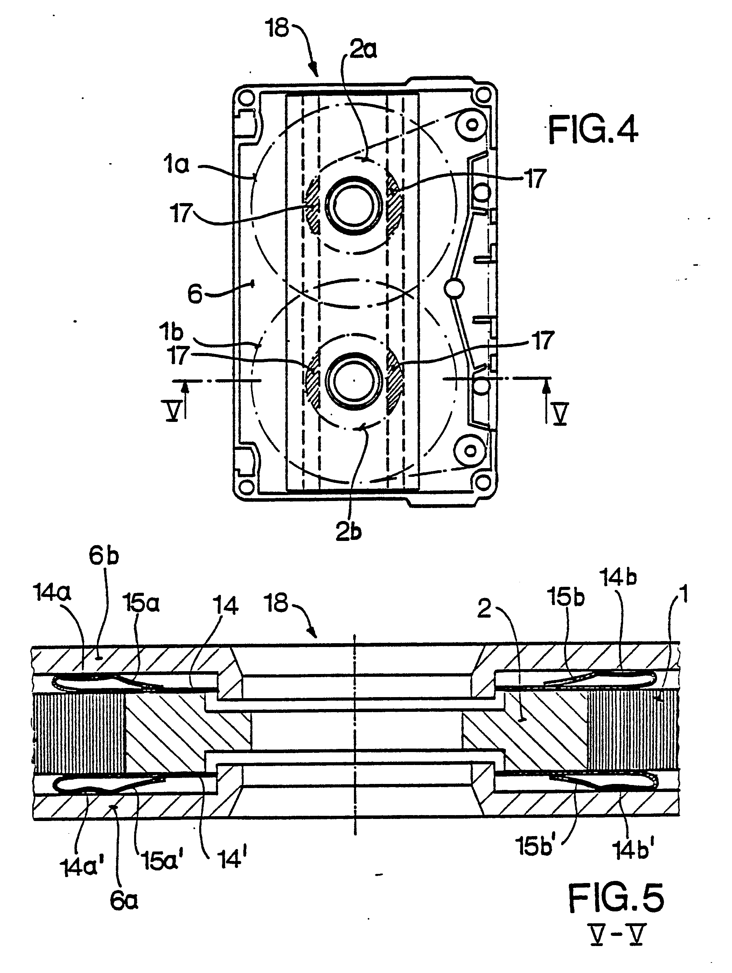

Figur 3 zeigt die detaillierte Ausbildung einer weiteren erfindungsgemäßen Beilage- oder Lagerfolie 14, mit der die Folien 7 in Figur 2 identisch ausgebildet sein kann beim Einsatz in umwendbaren Kassetten. Die Folie 14 besitzt eine besonders vorteilhafte Ausgestaltung der Längsknickfalten, die durch Abknickungen 14a und 14b im spitzen Winkelbereich (s. o.) zur Mittelachse der Folie 14 hin gebildet sind. An die Abknickungen 14a und 14b schließen sich noch Umknickungen 15a bzw. 15b an, die bei unbelasteter Folie zur Ebene der Folie 14 etwa parallele Folienstützteile bilden sollen. Diese Form der Folie 14 hat Vorteile beim Konfektionieren, d.h. beim Einlegen der Folie 14 in die Kassette, da die Höhen- und Seitenlage der Folie definierter und stabiler ist.

Eine Kassette 18 ist in Figur 4 anhand ihrer Bodenwand 6 in Draufsicht dargestellt. Eine Folie 14 gemäß Figur 3 ist jeweils zwischen Bandwickeln 1a und 1b und der benachbarten Boden- oder Deckelwand der Kassette dargestellt. Wie im Schnitt IV-IV in Figur 5 verdeutlicht ist, stützen sich die Umknickungen 15a und 15b innerhalb der oberen und unteren Gehäusehälften 6a und 6b bei gespannter Folie 14 und 14' von unten bzw. von oben derartig gegen die jeweilig vom Bandwickel 1 abgewandte Seite der Folien 14 bzw. 14' ab, so daß in den in Figur 4 eingezeichneten gestrichelten Bereichen 17 zusätzliche Abstützkräfte vorhanden sind. Wie in Figur 4 erkennbar, ist es zweckmäßig, die Breite der Längsknickstreifen und ihre Anordnung so zu wählen, daß sowohl die Wickelkerne 2a und 2b (siehe die schraffierten Bereiche in Figur 4) als auch die nahen Bandwickelbereiche in den Vorteil der Zusatzabstützung kommen. Das ist einfach durch die Bemessung möglich, indem der Abstand c der Längsknickstreifen (zwischen den Innenkanten 16a und 16b in Figur 3 gleich dem oder kleiner als der Durchmesser der Kerns 2 gewählt wird. Durch weitere Knicke im Bereich der Längsknickstreifen ist es denkbar, noch besondere Federcharakteristiken einzustellen. Ein besonderer Vorteil der Lagerfolien der vorliegenden Erfindung wird auch darin gesehen, daß sich die Spannung in den Abknickungen 14a und 14b der Längsknickstreifen 7a und 7b und in den Umknickungen 15a und 15b durch Relaxationskräfte nicht zurückgebildet, wie bei der Folienausbildung nach oben erwähntem Stand der Technik, sondern daß sich durch die Abknickung zum Mittelteil hin die Spannung eher vergrößert, so daß die Feder-, Führungs- und Abstützfunktion der Folie nicht mit wachsender Temperatur und Zeitdauer abnimmt.

Wie in Figur 3 angedeutet, können die Kunststoffolien vor dem Ausstanzen außen längs mindestens eines Randstreifens 10a und/oder 10b mit einer leitfähigen bzw. antistatischen Schicht versehen sein oder auf andere Weise leitfähig ausgebildet sein. Ist nun die anliegende Gehäuseinnenwand der Kassette ebenfalls leitfähig oder antistatisch ausgebildet, so werden Ladungen oder Ladungsdifferenzen die sich zwischen dem Wickelkern und/oder dem Bandwickel ausbilden zum Gehäuse hin abgeführt und verursachen keine Band- oder Wickellaufstörungen. Der Mittelteil 9 der Folie 14 kann, z. B. mit einer Gleitschicht 11, vorzugsweise mit einer antistatisch wirkenden Komponente (z. B. ähnlich der für die Kassettengehäuse verwendeten antistatischen Ausrüstmittel) versehen sein, die sich auch über die gesamte Folie, einschließlich der Längsknickstreifen erstrecken kann. Zusätzliche Randbeschichtungen 10, 10b erübrigen sich in diesem Fall.

Die Folien 7, 8, 14, 14' können aus allen bekannten und geeigneten Folienmaterialien bestehen, wie z. B. Polyester, Polypropylen, Polyethylen, Polycarbonat usw. Zweckmäßig sind die Folien auch durchsichtig und die verwendeten Gleit- und Antistatikmittel sind ebenfalls glasklar.

Die erfindungsgemäßen Längsknickstreifen oder -falten können durch übliche Verfahren durch Warm- oder Kaltbiegung hergestellt werden.

**Patentansprüche**

1. Bandkassette, insbesondere Magnetbandkassette, mit mindestens einem Bandwickel (1) auf einem Wickelkern (2) oder einer Flanschspule, auf den und von dem ein Band auf- bzw. abwickelbar ist, wobei zwischen dem die Bandwindungen aufweisenden Bandwickel und den Boden- und Deckelwänden mindestens je eine Folie mit umgebogenen oder umgeknickten Längsknickstreifen vorgesehen ist, dadurch gekennzeichnet, daß jede Folie (7, 8, 14, 14') einen Mittelteil und diesen seitlich begrenzende mindestens zwei längsknickstreifen (7a, 7b bzw. 14a, 14b und 15a, 15b) aufweisen, wobei letztere der Boden- oder Deckelwand (6a bzw. 6b) zugewandt sind und mit der Ebene des Folienmittelteils einen Winkel (β) von kleiner als 90° einschließen, so daß die Längsknickstreifen den Folienmittelteil gegenüber dem Bandwickel (1) innerhalb des Umrisses des Folienmittelteils an der zugehörigen Boden- oder Deckelwand (6a bzw. 6b) von unten bzw. von oben abstützen.

2. Bandkassette nach Anspruch 1, dadurch gekennzeichnet, daß der Winkel (β) im Bereich von ca. 5° bis ca. 30° liegt.

3. Bandkassette nach Anspruch 1 oder 2, dadurch gekennzeichnet, daß die Längsknickstreifen (7a, 7b bzw. 14s, 14b und 15a, 15b) an den Längsrändern der Folie (7, 8) vorgesehen sind.

4. Bandkassette nach Anspruch 1 oder 2, dadurch gekennzeichnet, daß die Längsknickstreifen durch jeweils eine Winkelabknickung (14a, 14b) und eine Parallelumknickung (15a, 15b) bezogen auf den Folienmittelteil gebildet sind.

5. Bandkassette nach Ansprüchen 1, 3 oder 4, dadurch gekennzeichnet, daß die Längsknickstreifen (14a, 14b bzw. 15a, 15b) die Folienrückseite bei aufliegendem Bandwickel (1) berührend ausgebildet sind.

6. Bandkassette, insbesondere nach Anspruch 1 oder 2, dadurch gekennzeichnet, daß die Längsknickstreifen der Folie (7, 14, 14') elektrisch leitfäßig ausgebildet sind.

7. Bandkassette nach Anspruch 6, dadurch gekennzeichnet, daß die Längsknickstreifen (7a, 7b bzw. 14a, 14b und 15a, 15b) zumindest außen mit einer Leitschicht (10a, 10b) versehen sind.

8. Bandkassette nach Anspruch 6, dadurch gekennzeichnet, daß die gesamte Folie (7, 8, 14, 14') elektrisch leitfähig ausgebildet ist.

9. Bandkassette nach Ansprüchen 1 und 2, dadurch gekennzeichnet, daß der Abstand (c) der Längsknickstreifen-Kanten (16a und 16b) gleich oder kleiner als der Durchmesser des Wickelkerns (2) gewählt ist.

10. Beilagefolie für eine Bandkassette nach einem der Ansprüche 1 bis 9, dadurch gekennzeichnet, daß dieselbe einen Mittelteil und diesen seitlich begrenzende mindestens zwei Längsknickstreifen (7a, 7b, bzw. 14a, 14b und 15a, 15b) aufweist, wobei letztere mit dem Mittelteil einen Winkel (β) von kleiner als 90° einschließen und bei Abstützung der Längsknickstreifen (7a, 7b bzw. 14a, 14b und 15a, 15b) auf einer ebenen Fläche und bei Auflage eines oder beider Bandwickel (1) die Folie (14, 14') in einer im wesentlichen parallelen Lage zur ebenen Fläche verbleibt.

11. Folie nach Anspruch 10, <u>dadurch gekennzeichnet</u>, daß die Längsknickstreifen durch eine Winkelabknickung (14a, 14b) und eine Parallelumknickung (15a, 15b), bezogen auf den Folienmittelteil gebildet sind.

12. Folie nach Anspruch 10, <u>dadurch gekennzeichnet</u>, daß die Längsknickstreifen (7a, 7b bzw. 14a, 14b und 15a, 15b) elektrisch leitfähig ausgebildet sind.

13. Folie nach Anspruch 12, <u>dadurch gekennzeichnet</u>, daß die Längsknickstreifen (7a, 7b bzw. 14a, 14b und 15a, 15b) zumindest außen mit einer Leitschicht (10a, 10b) versehen ist.


**Claims**

1. A tape cassette, in particular a magnetic tape cassette, comprising at least one roll (1) of tape on a hub (2) or or a flanged reel, onto which tape can be wound or from which tape can be unwound, a support liner with bent-over or folded-over longitudinal strips being provided between the roll of wound tape and the bottom wall and also between the said roll and the top wall, wherein each support liner (7, 8, 14, 14') has a middle part and at least two bent-over longitudinal strips (7a, 7b: 14a, 14b and 15a, 15b) disposed laterally on opposite sides of the middle part, the said longitudinal strips facing the bottom and top walls (6a and 6b), and forming an angle (β) of less than 90° with the middle part of the liner, so that the bent-over longitudinal strips bear against the bottom and top walls (6a and 6b) and urge the middle part of each liner against the roll (1) of tape, within the periphery of said middle part.

2. A tape cassette as claimed in claim 1, wherein the angle (β) is from about 5° to about 30°.

3. A tape cassette as claimed in claim 1 or 2, wherein the bent-over longitudinal strips (7a, 7b; 14a, 14b and 15a, 15b) are provided at the longitudinal edges of the support liners (7, 8).

4. A tape cassette as claimed in claim 1 or 2, wherein the bent-over longitudinal strips each comprise a bent-over portion (14a, 14b) and a folded-over portion (15a, 15b) which is parallel to the middle part of the liner.

5. A tape cassette as claimed in claim 1, 3 or 4, wherein the bent-over longitudinal strips (14a, 14b and 15a, 15b) come into contact with the back of the support liner when the roll (1) of tape rests on the liner.

6. A tape cassette particularly as claimed in claim 1 or 2, wherein the bent-over longitudinal strips of the support liner (7, 14, 14') are electrically conductive.

7. A tape cassette as claimed in claim 6, wherein the bent-over longitudinal strips (7a, 7b: 14a, 14b and 15a, 15b) are provided with a conductive layer (10a, 10b) at least on the outside.

8. A tape cassette as claimed in claim 6, wherein the entire support liner (7, 8, 14, 14') is electrically conductive.

9. A tape cassette as claimed in claims 1 and 2, wherein the distance (c) between the edges (16a and 16b) of the bent-over longitudinal strips is the same as or smaller than the diameter of the hub (2).

10. A support liner for a tape cassette as claimed in any of claims 1 to 9, which liner has a middle part and at least two bent-over longitudinal strips (7a, 7b; 14a, 14b and 15a, 15b) disposed laterally on opposite sides of the middle part, the said longitudinal strips forming an angle (β) of less than 90° with the said middle part, and which liner, when the bent-over longitudinal strips (7a, 7b; 14a, 14b and 15a, 15b) are supported on a flat surface and one or both rolls (1) of tape rest on the liner (14, 14'), remains substantially parallel to the flat surface.

11. A support liner as claimed in claim 10, wherein the bent-over longitudinal strips comprise a bent-over portion (14a, 14b) and a folded-over portion (15a, 15b) which is parallel to the middle part of the liner.

12. A support liner as claimed in claim 10, wherein the bent-over longitudinal strip, (7a, 7b; 14a, 14b and 15a, 15b) are electrically conductive.

13. A support liner as claimed in claim 12, wherein the bent-over longitudinal strips (7a, 7b; 14a, 14b and 15a, 15b) are provided with a conductive layer (10a, 10b) at least on the outside.


**Revendications**

1. Cassette de bande, en particulier cassette de bande magnétique, ayant au moins un rouleau de bande (1) sur un noyau d'enroulement (2) ou une bobine à flasque, sur lequel ou duquel peut s'enrouler ou se dérouler une bande, aux moins deux lamelles, qui présentent des bandes de flambage longitudinales repliées ou coudées, étant disposées respectivement entre le rouleau portant les spires de bande et les parois de dessus et de dessous, caractérisée par le fait que chaque lamelle (7, 8, 14, 14') possède une partie centrale et au moins deux bandes de flambage longitudinales (7a, 7b ou 14a, 14b et 15a, 15b) limitant latéralement cette partie centrale, les bandes de flambage étant tournées vers la paroi de dessus ou de dessous (6a ou 6b) et formant avec le plan de la partie centrale de la lamelle un angle (β) inférieur à 90°, de telle sorte que les bandes de flambage longitudinales servent d'appui, par le bas ou par le haut, contre la paroi de dessous ou de dessus (6a, ou 6b) correspondante, à la partie centrale de la lamelle, par rapport au rouleau de bande (1) sur le contour de cette partie centrale.

2. Cassette de bande selon la revendication 1 caractérisée par le fait que l'angle (β) est situé dans les limites d'environ 5° à environ 30°.

3. Cassette de bande selon la revendication 1 ou 2, caractérisée par le fait que les bandes de flambage longitudinales (7a, 7b, ou 14a, 14b et 15a, 15b) sont prévues sur les bords longitudinaux de la lamelle (7, 8).

4. Cassette de bande selon la revendication 1 ou 2, caractérisée par le fait que les bandes de flambage longitudinales sont formées chacune par un flambage suivant un certain angle (14a, 14b) suivi d'un flambage en direction parallèle (15a, 15b) par rapport à la partie centrale de la lamelle.

5. Cassette de bande selon les revendications 1, 3 ou 4, caractérisée par le fait que les bandes de flambage longitudinales (14a, 14b ou 15a, 15b) sont formées en étant au contact avec la face de dos de la lamelle sur le rouleau de bande posé dessus.

6. Cassette de bande, en particulier selon la revendication 1 ou 2, caractérisée par le fait que les bandes de flambage longitudinales de la lamelle (7, 14, 14') sont réalisées en étant conductrices de l'électricité.

7. Cassette de bande selon la revendication 6, caractérisée par le fait que les bandes de flambage longitudinales (7a, 7b ou 14a, 14b et 15a, 15b) sont munies au moins à l'extérieur, d'une couche conductrice (10a, 10b).

8. Cassette de bande selon la revendication 6, caractérisée par le fait que toute la lamelle (7, 8, 14, 14') est conductrice de l'électricité.

9. Cassette de bande selon les revendications 1 et 2, caractérisée par le fait que la distance (C) séparant les bords des bandes de flambage longitudinales (16a et 16b) est choisie égale ou inférieure au diamètre du noyau du rouleau (2).

10. Lamelle de calage pour cassette de bande selon l'une des revendications 1 à 9, caractérisée par le fait que celle-ci possède une partie centrale et au moins deux bandes de flambage longitudinales (7a, 7b ou 14a, 14b et 15a, 15b) limitant latéralement cette partie centrale, ces bandes de flambage formant avec la partie centrale un angle (β) inférieur à 90° et, lors d'un appui des bandes de flambage longitudinales (7a, 7b ou 14a, 14b et 15a, 15b) sur une surface plane et support d'un ou deux rouleaux de bande (1), la lamelle (14, 14') demeure dans une position sensiblement parallèle à la surface plane.

11. Lamelle selon la revendication 10, caractérisée par le fait que les bandes de flambage longitudinales sont formées par un flambage suivant un certain angle (14a, 14b) suivi d'un flambage en direction parallèle (15a, 15b) par rapport à la partie centrale de la lamelle.

12. Lamelle selon la revendication 10, caractérisée par le fait que les bandes de flambage longitudinales (7a, 7b ou 14a, 14b et 15a, 15b) sont réalisées conductrices de l'électricité.

13. Lamelle selon la revendication 12, caractérisée par le fait que les bandes de flambage longitudinales (7a, 7b, ou 14a, 14b et 15a, 15b) sont munies, au moins à l'extérieur, d'une couche conductrice (10a, 10b).

FIG.1

FIG.2

FIG.3

FIG.4

FIG.5

Ⅴ-Ⅴ

3